# EUROPEAN PATENT APPLICATION

(11) **EP 4 822 872 A1**
(43) Date of publication of application: **14.10.2026**
(21) Application number: 24913754.8
(22) Date of filing: 30.12.2024
(51) Int. Cl.: H01M 50/451, H01M 50/446, H01M 50/489, H01M 50/431, H01M 50/414, H01M 10/052

(54) **SEPARATOR FOR ELECTROCHEMICAL DEVICE AND METHOD FOR MANUFACTURING SAME**

(30) Priority: 28.12.2023 KR 20230194081
(71) Applicant: LG Chem, Ltd., Seoul 07336 (KR)
(72) Inventor: LEE, Joo-Sung, Daejeon 34122 (KR); KIM, Kee-Yong, Daejeon 34122 (KR); KIM, Jin-Woo, Daejeon 34122 (KR); LIM, Mun-Hyuk, Daejeon 34122 (KR)
(74) Representative: Hoffmann Eitle
(86) International application number: PCT/KR2024/021463
(87) International publication number: WO 2025/143950

(57) **Abstract**

A separator according to the present disclosure not only has excellent adhesion to an electrode but also ensures sufficient porosity, thereby exhibiting excellent resistance and ion conductivity properties. In addition, the time taken for a lamination process may be reduced during electrode assembly manufacture, thereby achieving high process efficiency in battery manufacture. Furthermore, energy density of a lithium secondary battery may be maximized by minimizing the height of an inorganic particle-filled portion.

## Description

### Technical Field

This application claims priority to Korean Patent Application No. 10-2023-0194081 filed on December 28, 2023. The present disclosure relates to a separator for an electrochemical device such as a lithium ion secondary battery.

### Background Art

Non-aqueous secondary batteries represented by lithium ion secondary batteries are widely used as power sources for portable electronic devices such as laptops, mobile phones, digital cameras, and camcorders. In addition, in recent years, application of these batteries to automobiles and the like is also being considered due to their characteristic of having a high energy density.

In lithium secondary batteries currently in production, a porous polymer substrate using a polyolefin-based polymer resin or the like is used as a separator substrate in order to prevent a short-circuit between a positive electrode and a negative electrode. However, the polymer substrate has a problem in that it shrinks or melts at high temperatures, exhibiting low heat resistance. Accordingly, when the temperature of the battery increases to a high temperature due to internal or external stimuli, the separator may shrink or melt, increasing the likelihood that the positive electrode and the negative electrode come into contact with each other, resulting in a short circuit. As a result, electrical energy may be rapidly released, leading to explosion or ignition of the battery.

Accordingly, to address these issues, a method of improving heat resistance by forming a porous filler layer in which inorganic particles and a binder resin are mixed on at least one surface of a polymer substrate is widely used. However, the heat-resistant layer is required to have sufficient porosity in terms of ensuring an ion transfer path and electrolyte liquid impregnation. The pores of the heat-resistant layer originate from an interstitial volume between inorganic particles. When the content of the binder resin increases, the interstitial volume is blocked by the binder resin, making it difficult to secure sufficient porosity. On the other hand, when the content of the binder resin is not sufficient, the electrode and the separator are not closely adhered to each other, and the electrode and the separator may be separated during a battery manufacturing process or battery operation.

Meanwhile, an electrode assembly may be typically manufactured by a roll-to-roll continuous process, and herein, a lamination process of pressing the laminated electrode and separator (applying hot pressing as necessary) is performed. In order to achieve electrode-separator bonding strength at a desired level, a sufficient lamination process time needs to be ensured, however, this may lead to a problem of lowering productivity such as reducing a production speed.

Accordingly, in a separator for an electrochemical device, there is a need for continuous research and development for securing sufficient porosity and adhesion (between an electrode and a separator) and process efficiency.

### DISCLOSURE

### Technical Problem

The present disclosure is directed to providing a separator capable of securing high adhesion to an electrode and improving battery production efficiency. In addition, the present disclosure is directed to providing an electrochemical device comprising the separator. It will be readily apparent that other objects and advantages of the present disclosure may be achieved by means or methods set forth in the claims and combinations thereof.

### Technical Solution

One embodiment of the present disclosure relates to a separator for an electrochemical device, the separator comprising: a porous polymer substrate; and an inorganic coating layer covering one surface or both surfaces of the porous polymer substrate,
wherein the inorganic coating layer comprises a plurality of adhesive polymer columns each having a predetermined volume, and the polymer column is made of a polymer material and has no pores,
at least a portion of the polymer column is exposed on a surface of the inorganic coating layer and another portion thereof is in contact with the surface of the porous substrate,
at least one of the polymer columns is spaced apart from another polymer column by a predetermined distance, and
spaces between the polymer columns are filled with an inorganic particle-filled portion, the inorganic particle-filled portion comprises inorganic particles and a binder resin, and the binder resin comprises a first binder resin satisfying the following [Equation 1], and in the following Equation 1, X represents a surface energy of the polymer column and Y represents a surface energy of the binder resin.
[Equation 1] $0.75 X < Y < 1.15 X .$

In the above-described aspect of the present disclosure, a thickness of the inorganic particle-filled portion may be 5% or greater and 40% or less of a diameter D₅₀ of the polymer column.

In any one of the above-described aspects of the present disclosure, the inorganic particle-filled portion may have a height (Tᵢ) of 5 µm or less.

In any one of the above-described aspects of the present disclosure, after a pressure of 3.0 MPa to 4.0 MPa is applied to the separator for 20 seconds or less under a temperature condition of 55°C to 65°C, a protruding height (Tₚ) of the polymer column may be equal to or less than 1.1 times the height (Tᵢ) of the inorganic particle-filled portion.

In any one of the above-described aspects of the present disclosure, after a pressure of 3.0 MPa to 4.0 MPa is applied to the separator for 20 seconds or less under a temperature condition of 55°C to 65°C, the protruding height (Tₚ) of the polymer column may be 1 µm or less.

In any one of the above-described aspects of the present disclosure, when observing an SEM image of the surface of the separator, craters generated by detachment of the polymer columns may account for less than 1% relative to 100% of the polymer columns before detachment.

In any one of the above-described aspects of the present disclosure, the polymer column may have a storage modulus (G') of 1,000 Pa or greater and 3,500 Pa.

In any one of the above-described aspects of the present disclosure, the polymer column may have an electrolyte liquid uptake of 30% or greater. The electrolyte liquid uptake is determined according to the following [Equation 2]. [Equation 2] 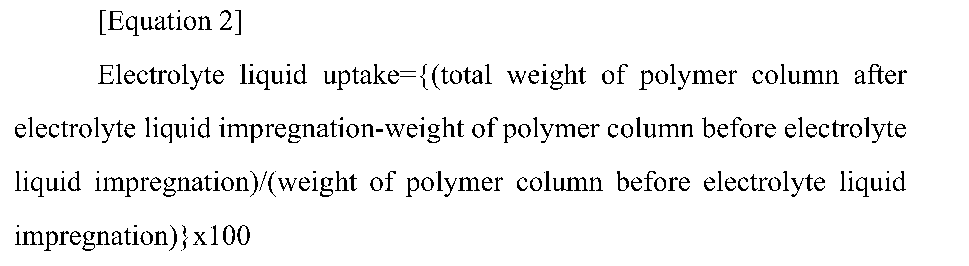 Electrolyte liquid uptake={(total weight of polymer column after electrolyte liquid impregnation-weight of polymer column before electrolyte liquid impregnation)/(weight of polymer column before electrolyte liquid impregnation)}x100

In any one of the above-described aspects of the present disclosure, a D₅₀ of the polymer column may be at least twice a D₅₀ of the inorganic particles.

In any one of the above-described aspects of the present disclosure, a D₁₀ of the polymer column may be 30% or greater of the D₅₀, and a D₉₀ thereof may be 200% or less of the D₅₀.

In any one of the above-described aspects of the present disclosure, based on a top view of the separator, an area occupied by the polymer columns may be 10% to 50% relative to 100% of an area of the inorganic coating layer surface.

In any one of the above-described aspects of the present invention, at least one of the polymer columns comprised in the inorganic coating layer has a cross-sectional area (a) of the polymer column observed in a cross-section at the lower 5% from a lowermost portion of the inorganic coating layer toward the surface portion, and a cross-sectional area of the polymer column observed in a cross-section at the upper 5% from an uppermost portion of the inorganic coating layer toward the lower portion, wherein the area (b) may be larger than the area (a).

In any one of the above-described aspects of the present disclosure, at least one of the polymer columns comprised in the inorganic coating layer has, in a cross-section of the polymer column observed in a vertical cross-section of the inorganic coating layer, a diameter (a) of a lower portion of the polymer column that is smaller than a diameter (b) of an upper portion of the polymer column, and a ratio of the diameter (b) to the diameter (a) may be 2 to 20.

In any one of the above-described aspects of the present disclosure, the inorganic coating layer may have a pore structure formed by an interstitial volume between the inorganic particles.

One embodiment of the present disclosure relates to an electrochemical device, and the electrochemical device comprises the separator according to any one of the above-described aspects.

In the present disclosure, each of the above-described embodiments may be implemented independently. Alternatively, two or more of the embodiments may be implemented in combination.

### Advantageous Effects

A separator according to the present disclosure not only has excellent adhesion to an electrode but also ensures sufficient porosity, thereby exhibiting excellent resistance and ion conductivity properties. In addition, the time taken for a lamination process can be reduced during electrode assembly manufacture, thereby achieving high process efficiency in battery manufacture. Furthermore, energy density of a lithium secondary battery can be maximized by minimizing the height of an inorganic particle-filled portion.

### Brief Description of Drawings

Drawings accompanying the present specification illustrate preferred examples of the present disclosure, and serve to provide a better understanding of the technical idea of the present disclosure together with the description of the invention provided above, and therefore, the present disclosure is not construed as being limited to matters described in these drawings. Meanwhile, shapes, sizes, scales or proportions of elements in the drawings comprised in the present specification may be exaggerated for the purpose of clearer description.
FIG. 1 is a diagram schematically illustrating one embodiment of a separator of the present disclosure.
FIG. 2 shows an SEM image of a portion of a surface of a separator of Comparative Example 1 near a winding center.

### Mode for Invention

Hereinafter, the present disclosure will be described in detail. Prior to this, terms or words used in the present specification and the claims should not be interpreted limitedly to common or dictionary meanings, and need to be interpreted as meanings and concepts corresponding to the technical idea of the present disclosure based on a principle in which the inventors may suitably define the concept of terms in order to describe their own invention in the best possible way. Accordingly, in the embodiments described in the present specification and constitutions illustrated in drawings are just most preferred one embodiment of the present disclosure and do not entirely represent the technical idea of the present disclosure, and therefore, it needs to be understood that there may be various equivalents and modified examples that may replace these at the time of filing.

Throughout the present specification, a description of a certain part "comprising" a certain component means that it may further comprise other components, and does not exclude other components unless particularly stated on the contrary.

In addition, terms such as "about" or "substantially" used throughout the present specification are used to indicate, when manufacturing and material tolerances inherent to the mentioned meaning are presented, the number or a meaning close to the number, and are used to prevent unscrupulous infringers from unfairly using the disclosure stating precise or absolute numbers to help understand the present application.

Throughout the present specification, a description of "A and/or B" refers to "A or B, or both".

Throughout the present specification, a particle diameter D₅₀ refers to a particle diameter at a 50% point in the cumulative particle count distribution based on the particle diameter. In other words, the D₅₀ refers to a particle diameter at a 50% point in the cumulative particle count distribution based on the particle diameter. In addition, a D₁₀ refers to a particle diameter at a 10% point in the cumulative particle count distribution based on the particle diameter, and a D₉₀ refers to a particle diameter at a 90% point in the cumulative particle count distribution based on the particle diameter. The particle diameter may be measured using a laser diffraction method. Specifically, a powder to be measured is dispersed in a dispersion medium, and then introduced to a commercially available laser diffraction particle size analyzer (for example, Microtrac S3500), and particle size distribution is calculated by measuring differences in diffraction patterns according to particle sizes as the particles pass through a laser beam. D_{10,} D₅₀ and D₉₀ may be measured by calculating particle diameters at 10%, 50% and 90% points, respectively, in the cumulative particle count distribution based on the particle diameter in the analyzer.

Specific terms used in the following detailed description of the invention are for convenience only and are not intended to be limiting. Terms such as 'left', 'right', 'upper' and 'lower' may indicate directions in the drawings referred to and should not be limiting. Words such as 'inward' and 'outward' respectively indicate directions toward or away from a geometric center of a designated device, system and members thereof. Terms such as 'front', 'rear', 'upward' and 'downward', and words and phrases relating thereto indicate locations and orientations in the drawings referred to and should not be limiting. Such terms comprise the words listed above, derivatives thereof and words of similar meaning.

In the present disclosure, a glass transition temperature (Tg) may be measured through a differential scanning calorimetry (DSC) curve obtained from a DSC analyzed at a heating rate of 10°C/min.

The present disclosure relates to a separator for an electrochemical device, and an electrochemical device comprising the same. In the present disclosure, the electrochemical device is a device converting chemical energy into electrical energy through an electrochemical reaction, and is a concept comprising a primary battery and a secondary battery. The secondary battery is rechargeable, and is a concept encompassing a lithium ion battery, a nickelcadmium battery, a nickel-hydrogen battery and the like.

### Separator

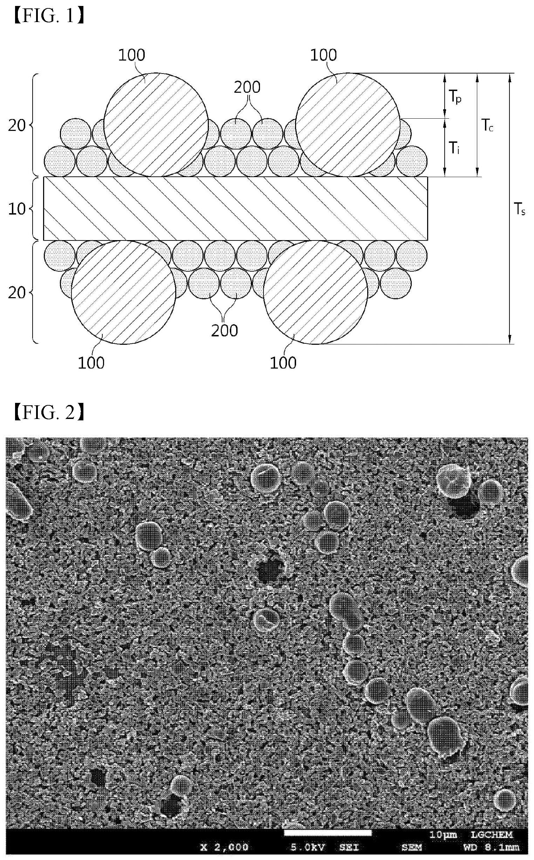

In one embodiment of the present disclosure, the separator comprises a porous substrate 10, and an inorganic coating layer 20 formed on at least one side surface or both side surfaces of the porous substrate. FIG. 1 is a diagram schematically illustrating a cross-section of the separator of the present disclosure, in which inorganic particles 200 and polymer columns 100 are disposed. FIG. 1 particularly illustrates a form before compressing (pressing) the separator during a manufacturing process of the separator, wherein the polymer columns protrude beyond an inorganic particle-filled portion. The compression may refer to artificially applying an external force during a battery assembly process.

The separator may have a total thickness of 5.0 µm to 30 µm, and the thickness may be properly adjusted in the above-mentioned range. For example, the total thickness may be 25.0 µm or less, 20.0 µm or less, 15.0 µm or less, 12.0 µm or less, or 10.0 µm or less. In one embodiment of the present disclosure, the separator preferably has a thickness of 15.0 µm or less, 14.0 µm or less, 13.0 µm or less, 12.0 µm or less, or 11.0 µm or less after being flattened by pressing described below. In addition, the separator may have porosity of about 25 vol% to 80 vol%. The porosity may be properly adjusted in the above-described range. For example, the porosity may be 30 vol% or greater, 35 vol% or greater, 40 vol% or greater, 50 vol% or greater, or 55 vol% or greater. Alternatively, the porosity may be 70 vol% or less, 65 vol% or less, 60 vol% or less, or 55 vol% or less. Meanwhile, the separator may have permeability in a range of about 50 sec/100 cc or greater and about 250 sec/100 cc or less. The permeability may be properly adjusted in the above-described range. For example, the permeability may be 60 sec/100 cc or greater, 70 sec/100 cc or greater, 100 sec/100 cc or greater, 120 sec/100 cc or greater, or 150 sec/100 cc or greater. Alternatively, the porosity may be 220 sec/100 cc or less, 200 sec/100 cc or less, or 180 sec/100 cc or less.

In one embodiment of the present disclosure, the thickness of the separator may be determined by cutting a cross-section of the separator specimen, observing the cross-section using an SEM, and taking the thickness at the thickest point as the thickness of the separator. Alternatively, thicknesses at two or more arbitrary points are measured, and an average value thereof may be taken as the thickness of the separator. When the thickness is measured at four or more points, the lowest and/or highest values may be excluded, and the average of the remaining values may be taken.

In one embodiment of the present disclosure, the porosity may be calculated by determining a density (apparent density) of an object to be measured such as the separator, and a net density of the object to be measured from a composition ratio of materials comprised in the object to be measured and density of each component, and then calculating a difference between the apparent density and the net density. For example, the porosity may be calculated by the following [Equation 3]. [Equation 3] $Porosity \left(vol%\right) = \left\{1-\left(apparent density/net density\right)\right\} \times 100$

Meanwhile, apparent density in Equation above may be calculated from the following [Equation 3]. [Equation 4] 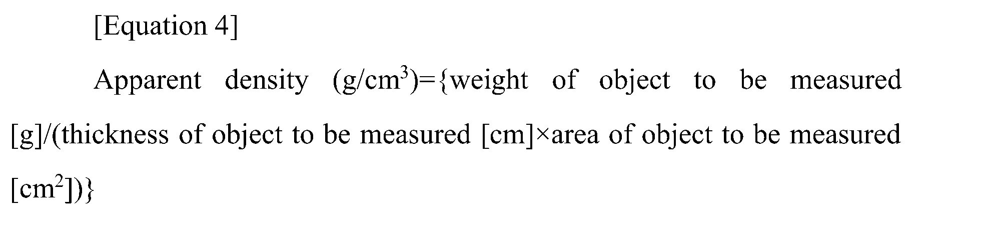 Apparent density (g/cm3)={weight of object to be measured [g]/(thickness of object to be measured [cm]×area of object to be measured [cm2])}

Alternatively, the porosity or pore size may be measured with an adsorption gas such as nitrogen using BELSORP (BET apparatus) by BEL JAPAN Co., Ltd., or may be measured using a method such as mercury intrusion porosimetry or capillary flow porosimetry.

The term 'permeability' used in the present specification refers to time required for 100 cc of air to pass through an object whose permeability is to be measured such as a separator and a porous substrate, may be expressed as a unit of second/100 cc, may be used interchangeably with transmittance, and may be commonly expressed as a Gurley value, or the like. In a specific embodiment of the present disclosure, the permeability may be measured in accordance with JIS P8117. In addition, air transmittance P1 measured for an object having a thickness of T1 may be converted into transmittance P2 corresponding to when the object has a thickness of 20 µm by an equation of P2=(P1×20)/T1.

### Porous Substrate

The porous substrate refers to, as a porous ion-conducting barrier that allows ions to pass therethrough while blocking an electrical contact between a negative electrode and a positive electrode, a substrate having multiple pores formed therein. The pores are interconnected to each other, allowing gas or liquid to pass from one side surface of the substrate to the other side surface.

As a material constituting such a porous substrate, either an organic material or an inorganic material having electrical insulation properties may be used. In particular, in terms of providing a shut-down function to the substrate, a thermoplastic resin is preferably used as the material constituting the substrate. Herein, the shut-down function refers to a function in which, when the temperature of a battery rises, the thermoplastic resin melts and closes the pores of the porous substrate to block ion migration, thereby preventing thermal runaway of the battery. As the thermoplastic resin, a thermoplastic resin having a melting point of lower than 200°C is suitable, and polyolefin is particularly preferred.

In addition, at least one of polymer resins such as polyethylene terephthalate, polybutylene terephthalate, polyacetal, polyamide, polycarbonate, polyimide, polyetheretherketone, polyethersulfone, polyphenylene oxide, polyphenylene sulfide or polyethylene naphthalene may be further included. The porous substrate may be a non-woven fabric, a porous polymer film, or a laminate of two or more thereof, but is not particularly limited thereto.

Specifically, the porous polymer substrate is any one of the following a) to e).
a) A porous film formed by melting/extruding a polymer resin,
b) a multilayer film formed by laminating two or more layers of the porous film of a),
c) a non-woven web prepared by laying filaments obtained by melting/spinning a polymer resin,
d) a multilayer film formed by laminating two or more layers of the non-woven web of b), and
e) a porous composite film having a multilayer structure comprising two or more of a) to d).

In the present disclosure, the porous substrate may have a thickness in a range of 3 µm to 12 µm or 5 µm to 12 µm. When the thickness does not reach the above-mentioned value, the function of a conductive barrier is not sufficient, and when the thickness excessively exceeds the above-mentioned range (that is, too thick) on the contrary, resistance of the separator may increase excessively.

In one embodiment of the present disclosure, the polyolefin may have a weight average molecular weight of 100,000 to 5,000,000. For example, the molecular weight (Mw) may be 200,000 or greater, 500,000 or greater, 700,000 or greater, or 1,000,000 or greater. Alternatively, the molecular weight may be 4,000,000 or less, 3,000,000 or less, 2,500,000 or less, 2,000,000 or less, or 1,500,000 or less. As a unit of the molecular weight (Mw), g/mol may be used. When the weight average molecular weight is less than 100,000, it may be difficult to secure sufficient mechanical properties. In addition, when the weight average molecular weight is greater than 5,000,000, shut-down properties may deteriorate, or molding may become difficult. In addition, the porous substrate may have puncture strength of 300 gf or greater in terms of improving a manufacturing yield. The puncture strength of the porous substrate indicates a maximum puncture load (gf) measured by performing a puncture test using a Kato tech KES-G5 handy compression tester under conditions in which the curvature radius of the needle tip is 0.5 mm and the puncture speed is 2 mm/sec.

In a specific embodiment of the present disclosure, any planar porous polymer substrate used in electrochemical devices may be used as the porous polymer substrate, and for example, an insulating thin film having high ion transmittance and mechanical strength, a pore diameter of generally 10 nm to 200 nm, and a thickness of generally 2 µm to 12 µm may be used. Meanwhile, the porous substrate may have porosity of 20 vol% to 60 vol% or 30 vol% to 60 vol% and a pore size of 10 nm to 200 nm, however, the porosity and the pore size are not particularly limited thereto.

### Inorganic Coating Layer

In the present disclosure, the separator comprises an inorganic coating layer formed on one side surface of the porous substrate. The inorganic coating layer comprises a plurality of polymer columns, a plurality of inorganic particles and a binder resin. The binder resin comprises a binder resin A having a surface energy similar to that of the polymer column.

In a specific embodiment of the present disclosure, in the inorganic coating layer, the inorganic particles may be comprised in an amount of about 65 % or greater relative to 100 wt% of the inorganic coating layer, and for example, may be comprised in an amount ranging from, for example, about 70 wt% to 90 wt%. In addition, the polymer column may be comprised in an amount ranging from 10 parts by weight to 40 parts by weight and preferably 20 parts by weight to 35 parts by weight relative to 100 parts by weight of the inorganic particles.

When the content of the polymer column is low in the inorganic coating layer, it is difficult to secure adhesion at a desired level, however, when the polymer column is comprised in an amount exceeding the above-mentioned range, the Gurley value and/or porosity of the separator may be reduced, which is not preferred.

Meanwhile, in the planar image of the inorganic coating layer, the total area of the polymer columns before compression, after compression or both may be 10% to 80% and preferably 10% to 50% based on the total area of the inorganic coating layer.

In the inorganic coating layer, two or more of the polymer columns may gather to form a cluster, or individual polymer columns may be spaced apart from each other by a predetermined interval. In one embodiment of the present disclosure, two or more of the polymer columns gathering to form a cluster accounts for 30 vol% or less, preferably 20 vol% or less and more preferably 10 vol% or less relative to 100 vol% of the total polymer columns. Excessive clustering of the polymer columns may cause non-uniformity in resistance in the separator. Accordingly, the polymer columns forming a cluster are preferably 10 vol% or less relative to 100 vol% of the total polymer columns in terms of increasing uniformity in resistance. In one embodiment of the present disclosure, the polymer columns are preferably spaced apart from other polymer columns in a predetermined distance without direct contact, and distributed in a sea-island pattern in the inorganic coating layer. A plurality of the polymer columns are embedded in the inorganic coating layer, such that they are exposed or protrude beyond the surface of the inorganic coating layer, and some of the polymer columns may have a protruding height of greater than 1 µm. In addition, some of the exposed or protruding polymer columns may be in contact with the porous substrate. Herein, the polymer column protruding beyond the surface of the inorganic coating layer means that the height of the polymer column is greater than the height of the inorganic particle-filled portion in the inorganic coating layer, resulting in a height greater than that of the inorganic particle-filled portion.

In one embodiment of the present disclosure, the inorganic coating layer may have an average pore size of 20 nm to 1,000 nm. In one embodiment of the present disclosure, the pore size may be measured for the inorganic particle-filled portion. In the above-mentioned range, the inorganic coating layer may have an average pore size of 800 nm or less, or 500 nm or less, and, independently therefrom or together therewith, 20 nm or greater, 50 nm or greater, or 100 nm or greater. For example, the inorganic coating layer may have an average pore size of 20 nm to 800 nm. The pore size may be calculated from a shape analysis using SEM images. When the pore size is less than the above-mentioned range, the pores are likely to be blocked due to the expansion of a binder resin in the coating layer, and when the pore size is out of the above-mentioned range, there are problems in that functioning as an insulating layer is difficult, and self-discharge properties deteriorate after manufacturing a secondary battery.

In one embodiment of the present disclosure, the inorganic coating layer preferably has porosity (porosity in a state comprising the polymer column) of 30 % to 80 %. The porosity may be properly adjusted in the above-mentioned range. For example, the porosity may be 35 vol% or greater, 40 vol% or greater, or 45 vol% or greater. Alternatively, the porosity may be 75 vol% or less, 70 vol% or less, or 65 vol% or less. Having porosity of 30% or greater is advantageous in terms of lithium ion permeability, and when the porosity is 80% or less, the surface opening ratio is not too high, which is suitable for securing adhesion between the separator and an electrode.

Meanwhile, in one embodiment of the present disclosure, in the observation of an SEM image for the surface of the inorganic coating layer of the separator, it is preferred that craters generated by detachment of the polymer columns may account for less than 1% relative to 100% of the polymer columns before detachment. Although the thickness of the inorganic coating layer is small as described above, the separator of the present disclosure comprises a binder resin A having a small surface energy difference from the polymer columns, and as a result, the polymer columns are well bonded to the inorganic coating layer through the binder resin A, reducing the occurrence of detachment.

### Polymer Column

The polymer column may comprise a polymer resin in an amount of 90 wt% or greater, 95 wt% or greater, or 99 wt% or greater relative to 100 wt% of the polymer column. Preferably, the polymer column may be formed of a polymer resin. In addition, the polymer column has adhesive properties, and may adhere to battery materials adjacent to the polymer column, such as inorganic particles or the porous substrate.

In the present disclosure, the polymer column may not have open cell-type pores in the body. It is preferred that the polymer column does not have open cell-type pores, so that a fluid such as gas or fluid does not flow through the polymer column body.

As described above, at least a portion of one or more of the polymer columns is exposed or protrude beyond the surface of the inorganic coating layer, while another portion thereof may be in contact with the surface of the porous substrate.

In one embodiment of the present disclosure, the D₁₀ of the polymer column may be 30% or greater of the D₅₀, and the D₉₀ thereof may be 200% or less of the D₅₀. Together therewith or independently therefrom, the D₅₀ of the polymer column may be at least twice the D₅₀ of the inorganic particles.

In one embodiment of the present disclosure, the polymer column may have a D₅₀ of about 2.0 µm to 7.0 µm, and the D₅₀ may be properly adjusted in the above-mentioned range. For example, the D₅₀ of the polymer column may be in a range of 4 µm to 6 µm. The D₅₀ of the polymer column reflects the state before pressing the separator, and preferably before slurry preparation.

In one embodiment of the present disclosure, one or more of the polymer columns may be higher than the inorganic particle-filled portion when the separator is not subjected to artificial pressing after manufacture. In other words, one or more of the polymer columns may protrude from the surface of the inorganic particle-filled portion. In other words, one or more of the polymer columns may protrude from the surface of the inorganic particle-filled portion. In one embodiment of the present disclosure, when the polymer column protrudes beyond the inorganic coating layer, the thickness of the inorganic particle-filled portion may be 85% or less of the D₅₀ of the polymer column.

Meanwhile, in one embodiment of the present disclosure, the height (T_{c}) of the polymer column may be determined by cutting a cross-section of the separator specimen, observing the cross-section by an SEM, and then taking the value of the highest portion of the polymer column.

Meanwhile, in one embodiment of the present disclosure, the protruding height (Tₚ) of the polymer column may be determined by cutting a cross-section of the separator specimen, observing the cross-section by an SEM, and then taking the value of the portion where the gap between the inorganic particle-filled portion and the polymer column is greatest.

Meanwhile, in one embodiment of the present disclosure, one or more of the polymer columns may be flattened by the protruding portions being pressed when applying a pressure of 0.5 MPa or greater and 20.0 MPa or less, for example, a pressure of 2.0 MPa to 8.0 MPa, and the thickness of the inorganic coating layer may be uniform. Meanwhile, the pressing may be hot pressing. Such properties are advantageous for strengthening adhesion between an electrode and the separator during electrode assembly manufacture and for ensuring a close contact between the electrode and the separator, preventing separation. In other words, the polymer column may exhibit softened properties under conditions for laminating the electrode and the separator, that is, a hot press condition.

When the separator according to the present disclosure is compressed under pressing conditions of 2.0 MPa to 7.0 MPa and 55°C to 65°C, the inorganic coating layer has a height (T_{coating layer}) of less than 1.1xTᵢ. In addition, after compression under the above-mentioned conditions, the polymer column may have a protruding height (Tₚ) of 1 µm or less, or less than 1 µm, resulting in flattening of the separator. Referring to FIG. 1, in the present disclosure, the T_{c} refers to an overall height of the inorganic coating layer (single side), and is based on the highest portion of the inorganic coating layer from the porous substrate. In the present disclosure, the T_{c} may be equal to the height of the polymer column that protrudes the most. In addition, the Tₚ is based on the highest portion of the inorganic coating layer from the inorganic particle-filled portion.

Meanwhile, in the present disclosure, the pressing may be performed in a range of several seconds (sec) to several minutes (min). For example, the pressing may be performed within 60 seconds or 30 seconds. Since the separator according to the present disclosure may be flattened in a short period of time, process efficiency may be improved.

The above-mentioned compression conditions are generally based on lamination process conditions of an electrode and a separator for manufacturing an electrode assembly. Such properties are advantageous for strengthening adhesion between the electrode and the separator during battery manufacture and for ensuring a close contact between the electrode and the separator, preventing separation.

In the present specification, the term flattening means that, by the above-described pressing conditions, the thickness of the inorganic particle-filled portion and the height of the polymer column are the same, or a height difference between the inorganic particle-filled portion and the polymer column is 1 µm or less or less than 1 µm, preferably less than 0.5 µm and more preferably less than 0.3 µm. In one embodiment of the present disclosure, the height of the polymer column may be based on the polymer column having the greatest height among the polymer columns.

In other words, when the separator according to the present disclosure is applied to battery manufacture, it is preferred that the thickness of the inorganic particle-filled portion is smaller than the D₅₀ of the polymer column after laminating the electrode and the separator.

Meanwhile, the flattened polymer column may have a larger area observed in a plan view compared to before pressing. Herein, the majoraxis length of the polymer column observed in a plan view after flattening is preferably 10 times or less the D₅₀ of the polymer column before flattening.

In the present disclosure, from the perspective of flattening by pressing, the polymer column preferably has a storage modulus (G') of 1,000 Pa or greater and 3,500 Pa or less at room temperature. The storage modulus may be more preferably 1,000 Pa to 3,000 Pa. Preferably, the storage modulus may pertain to the material forming the polymer column. When the storage modulus at room temperature falls within the above-mentioned range, adhesion is readily achieved by deformation of the polymer column and an anchoring mechanism in the pores of the electrode surface due to low modulus upon applying pressure to the electrode/separator laminate, and bonding strength may be maintained after releasing the pressure due to high modulus. In one embodiment of the present disclosure, the room temperature may be in a range of 20°C to 25°C. In addition, in one embodiment, the polymer column may have a storage modulus in a range of 0.05 Pa to 100 Pa at high temperatures (50°C to 80°C or 60°C to 80°C, for example, 60°C). Meanwhile, considering the temperature applying conditions in an actual battery assembly process, the polymer column may have a ratio of the storage modulus at 60°C to the storage modulus at room temperature (G' (60°C)/G' (room temperature)) of 0.1 or less.

Together therewith or independently therefrom, the polymer column may have at least one tan δ peak in a range of 45°C to 80°C when measured using a dynamic mechanical analyzer (DMA; ARES-G2, TA Instrument). The tan δ peak appearing at a temperature of lower than 45°C is not preferred since adhesive properties between the wound separators may be exhibited, and when the temperature is higher than 80°C, a sudden drop in the storage modulus is not observed even when applying a temperature, making it difficult to flatten the polymer column during high-temperature pressing.

In one embodiment of the present disclosure, the storage modulus and the tan δ peak may be measured using a rheological property analyzer (dynamic mechanical analyzer (DMA), ARES-G2, TA Instrument). In a specific embodiment, the storage modulus may be determined by conducting a temperature sweep test under a temperature condition of -60°C to 80°C and a frequency of 1.0 rad/s. In addition, the tan δ peak may be determined by calculating a ratio of the loss modulus to the storage modulus from the moduli (storage modulus and loss modulus) measured above. In addition, through such a DMA, the slope between the storage modulus (G') 45°C and the storage modulus (G') at 70°C may be measured.

In one embodiment of the present disclosure, after injecting a liquid electrolyte during battery manufacture, the polymer column may dissolve and lose adhesion, or viscosity of the liquid electrolyte increases by the dissolved components, causing a risk of increasing resistance of a lithium secondary battery, and therefore, the polymer column preferably has proper solubility. For example, solubility in an organic solvent or electrolyte may be lowered through crosslinking the surface of the material forming the polymer column.

In a specific embodiment, the polymer column may have a dissolved amount (weight) of 55% or less, preferably 35% or less, more preferably 25% or less, even more preferably 22% or less, and most preferably 20% or less after being dissolved in THF (tetrahydrofuran) for 1 to 48 hours.

Meanwhile, in another embodiment, the polymer column preferably has an electrolyte liquid uptake of 30% or greater. The electrolyte liquid uptake may be calculated by the following [Equation 2]. [Equation 2] 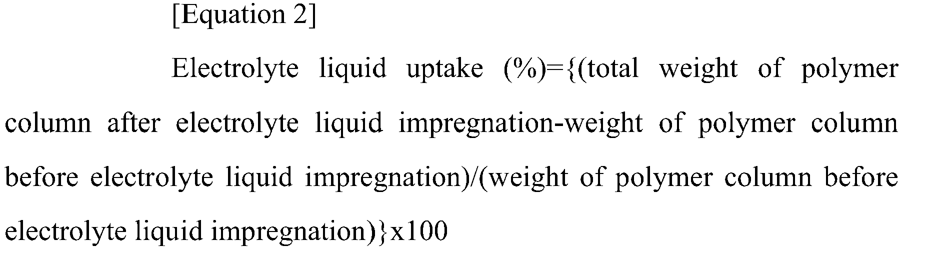 Electrolyte liquid uptake (%)={(total weight of polymer column after electrolyte liquid impregnation-weight of polymer column before electrolyte liquid impregnation)/(weight of polymer column before electrolyte liquid impregnation)}x100

In addition, when the above-described properties are satisfied, it is possible to prevent the polymer column from dissolving and losing adhesion after injecting a liquid electrolyte, or prevent an increase in the resistance of a lithium secondary battery by increasing viscosity of the liquid electrolyte by the dissolved components.

The electrolyte liquid uptake is calculated by impregnating the polymer column having a predetermined size with an electrolyte liquid for several minutes to within 1 hour, for example, for 5 minutes, taking it out, removing the electrolyte liquid remaining on the surface, and then measuring the weight.

As the electrolyte liquid, for example, 1 M LiPF₆ in an ethylene carbonate/ethylmethyl carbonate (EC/EMC, volume ratio 30:70) electrolyte may be used, however, the electrolyte liquid is not limited thereto, and those used as an electrolyte liquid for a lithium ion secondary battery may be used without limit.

In one embodiment of the present disclosure, the polymer column, having the above-described properties, preferably comprises a material that is non-reactive in a lithium secondary battery and may provide bonding strength between the separator and an electrode. Considering these aspects, in the present disclosure, the polymer column may comprise an acrylic polymer. The polymer column may comprise the acrylic polymer in an amount of, for example, 10 wt% or greater, 30 wt% or greater, 50 wt% or greater, 70 wt% or greater or 90 wt% or greater relative to 100 wt% of the polymer column. In one embodiment of the present disclosure, the acrylic material may include at least one repeating unit among an acrylate-based acrylate, methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, stearyl acrylate, methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. However, the acrylic polymer is not limited thereto. Meanwhile, in a specific embodiment, at least one hydrogen in the unit may be substituted with another substituent. In one embodiment of the present disclosure, the acrylic polymer may comprise the above-described repeating unit in an amount of 30 wt% or greater, 50 wt% or greater, 70 wt% or greater or 90 wt% or greater relative to 100 wt% of the acrylic polymer.

Meanwhile, in one embodiment of the present disclosure, the acrylic polymer may have a weight average molecular weight of about 20,000 to 800,000.

In one embodiment of the present disclosure, at least one of the polymer columns has a cross-sectional area (a) of the polymer column observed in a cross-section at the lower 5% from a lowermost portion of the inorganic coating layer toward the surface portion, and a cross-sectional area of the polymer column observed in a cross-section at the upper 5% from an uppermost portion of the inorganic coating layer toward the lower portion, and the area (b) may be larger than the area (a). Such characteristics of the polymer column may correspond to cases where the polymer column protrudes from the inorganic coating layer surface and/or is flattened by pressing. Preferably, the characteristics may be confirmed in the form of the polymer column after the protrusion and the subsequent flattening.

Together therewith or independently therefrom, at least one of the polymer columns may have, in a cross-section of the polymer column observed in a vertical cross-section of the inorganic coating layer, a diameter (a) of a lower portion of the polymer column that is smaller than a diameter (b) of an upper portion of the polymer column. In one embodiment, the ratio of the upper portion diameter (b) to the lower portion diameter (a) may be greater than 1 and 20 or less, 1.2 to 20, 1.5 to 20, or 2 to 20. Such characteristics of the polymer column may correspond to cases where the polymer column protrudes from the inorganic coating layer surface and/or is flattened by pressing. Preferably, the characteristics may be confirmed in the form of the polymer column after the flattening. In one embodiment of the present disclosure, the diameter of the upper portion refers to a diameter measured at an upper 5% point from the uppermost portion of the polymer column toward the lower portion, and the diameter of the lower portion refers to a diameter measured at a lower 5% point from the lowermost portion of the polymer column toward the upper portion.

In one embodiment of the present disclosure, the height of the polymer column, the diameter length of the polymer column and/or the cross-sectional size thereof may be calculated from SEM images of horizontal or vertical cross-section of the separator. FIG. 2 shows an SEM image of the surface of the separator of Comparative Example 1, in which dimensions of individual components may be identified. As another method of using SEM images, the SEM images are classified into grey levels, and an area corresponding to a specific grey level corresponding to the polymer column may be measured. The grey level refers to a shading value for a number of pixels included in the SEM image. For example, in a SEM image having 256 grey levels having 0 to 255 levels, the shading value may range from 0 to 255. In a specific embodiment of the present disclosure, the polymer column may have grey levels in a range of 10 to 50, and the inorganic particles may have grey levels in a range of 160 to 220. Accordingly, in an SEM image of an arbitrary cross-section of the separator, the regions of the polymer column may be set and defined from pixels having gray levels of 10 to 50, and length and area thereof may be calculated. In the present disclosure, the cross-sectional SEM image of the electrode may be obtained by performing an energy dispersive X-ray spectroscopy (EDS) mapping of the components on the cross-section of the electrode obtained by argon (Ar) ion milling using an EDS detector of a scanning electron microscope (SEM) device, followed by image processing.

In another specific embodiment of the present disclosure, the diameter or area of the polymer column may be calculated by threedimensionally modeling the separator and/or the inorganic coating layer, and then obtaining an arbitrary cross-section therefrom.

Meanwhile, in one embodiment of the present disclosure, the inorganic coating layer may further comprise an additive such as a dispersant or a thickener. It is suitable that the additive is comprised in an amount of 5 wt% or less relative to 100 wt% of the inorganic coating layer.

### Inorganic Particle-Filled Portion

In the inorganic coating layer of the separator, spaces between the polymer columns may be filled with a mixture comprising inorganic particles and a binder resin. In the present specification, the portion filled with a mixture comprising inorganic particles and a binder resin is referred to as an 'inorganic particle-filled portion'. The inorganic particle-filled portion may further comprise a binder resin to secure bonding strength between the inorganic particles, and between the inorganic particles and the porous substrate. The inorganic particle-filled portion has pore(s) resulting from an interstitial volume, a space formed between adjacent inorganic particles. The inorganic coating layer may have a porous structure with predetermined porosity by the pores, allowing gas or liquid to pass from one side surface to the other side surface. The inorganic particles and the polymer columns may be bonded to each other due to adhesive properties, or may be bonded via the binder resin.

In one embodiment of the present disclosure, the thickness (Tᵢ) of the inorganic particle-filled portion may be 85% or less of the D₅₀ of the polymer column before flattening the separator. For example, the thickness (Tᵢ) may be in a range of 5% to 40%. In a specific embodiment, Tᵢ may be 0.5 µm to 5 µm, and may be properly adjusted in the above-mentioned range. Tᵢ may be, for example, 4 µm or less, 3 µm or less or 2 µm or less, and preferably 1.5 µm or less or 1.0 µm or less. When the Tᵢ is in the above-mentioned numerical range, adhesion to an electrode is advantageous in terms of battery cycle properties and resistance properties. In addition, when applied to a battery, energy density of the battery may be improved since the thickness of the separator is reduced. When the inorganic coating layer is disposed on both surfaces of the porous substrate, the thickness of the inorganic particle-filled portion refers to a value measured for the inorganic coating layer disposed on any one surface.

In one embodiment of the present disclosure, the height (thickness, Tᵢ) of the inorganic particle-filled portion (single side) may be determined by cutting a cross-section of the separator specimen, observing the cross-section by an SEM, then measuring thicknesses at arbitrary two or more points in a region where the polymer column is not located, and taking an average value thereof as the height. When the thickness is measured at four or more points, the lowest and/or highest values may be excluded, and the average of the remaining values may be taken. The lowest point of the inorganic particle-filled portion is employed as the surface of the porous substrate.

Meanwhile, in one embodiment of the present disclosure, the height of the inorganic particle-filled portion may tend to increase as the inorganic particle-filled portion approaches the polymer column. The tendency may be more pronounced with respect to the peripheral region of the polymer column. In other words, outside the peripheral region, the height of the inorganic particle-filled portion may gradually increase toward the polymer column from an arbitrary point of the inorganic particle-filled portion, and the height may increase relatively steeply toward the polymer column from a boundary of the peripheral region. In one embodiment of the present disclosure, the peripheral region may refer to a portion having a width of about 2 µm from the boundary between the inorganic particle-filled portion and the polymer column toward the inorganic particle-filled portion.

### Inorganic Particles

In a specific embodiment of the present disclosure, the inorganic particles are not particularly limited as long as they are electrochemically stable. In other words, the inorganic particles that may be used in the present disclosure are not particularly limited as long as they do not undergo oxidation and/or reduction reaction in an operating voltage range (for example, 0 V to 5 V based on Li/Li+) of an electrochemical device in which they are used. In particular, using inorganic particles with a high dielectric constant as the inorganic particles contributes to an increase in the degree of dissociation of an electrolyte salt in a liquid electrolyte, such as a lithium salt, thereby improving ion conductivity of the electrolyte liquid.

For the reasons described above, the inorganic particles preferably comprise high-dielectric inorganic particles having a dielectric constant of 5 or greater and preferably 10 or greater. Nonlimiting examples of the inorganic particles having a dielectric constant of 5 or greater include BaTiO₃, Pb(Zr,Ti)O₃ (PZT), b₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC, TiO₂ or mixtures thereof.

In addition, as the inorganic particles, inorganic particles having a lithium ion transfer ability, that is, inorganic particles that contain a lithium element but do not store lithium and instead have a function to transport lithium ions may be used. Nonlimiting examples of the inorganic particles having a lithium ion transfer ability include (LiAlTiP)ₓO_{y}-based glass (0<x<4, 0<y<13) such as lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3) or 14Li₂O-9Al₂O₃-38TiO₂-39P₂O₅, lithium germanium thiophosphate (LiₓGe_{y}P_{z}S_{w}, 0<x<4, 0< y<1, 0<z<1, 0<w<5) such as lithium lanthanum titanate (LiₓLa_{y}TiO₃, 0<x<2, 0<y<3) or Li_{3.25}Ge_{0.25}P_{0.75}S₄, lithium nitride (LiₓN_{y}, 0<x<4, 0<y<2) such as Li₃N, SiS₂-based glass (LiₓSi_{y}S_{z}, 0<x<3, 0<y<2, 0<z<4) such as Li₃PO₄-Li₂S-SiS₂, P₂S₅-based glass (LiₓP_{y}S_{z}, 0<x<3, 0< y<3, 0<z<7) such as LiI-Li₂S-P₂S₅, or mixtures thereof.

In addition, the average particle diameter of the inorganic particles is not particularly limited, but may preferably be in a range of 0.1 µm to 1.5 µm to form a coating layer with uniform thickness and for proper porosity. When the average particle diameter is less than 0.1 µm, dispersibility may be reduced, and when the average particle diameter is greater than 1.5 µm, the thickness of the formed coating layer may increase. Meanwhile, in one embodiment of the present disclosure, the inorganic particles may be comprised in an amount of about 50 wt% to 90 wt% in the inorganic coating layer.

According to a non-limiting embodiment of the present disclosure, the diameters (D₅₀) of the inorganic particles may be properly adjusted in a range of 0.1 µm to 1.5 µm, and for example, may be in a range of 200 nm to 1 µm.

### Binder Resin

The inorganic coating layer comprises a binder resin to ensure bonding strength between the inorganic particles, and between the inorganic particles and the porous substrate. In the inorganic coating layer, the inorganic particles and the binder resin may be comprised in a weight ratio of 70:30 to 99.9:0.1 or 70:30 to 99:1. Together therewith or independently therefrom, the binder resin may be comprised in an amount of 0.1 parts by weight to 10 parts by weight or 0.1 parts by weight to 5 parts by weight relative to 100 parts by weight of the inorganic particles.

Meanwhile, in one embodiment of the present disclosure, the binder resin preferably comprises a binder resin having a surface energy similar to that of the polymer column. For convenience of explanation, the binder resin having a surface energy similar to that of the polymer column is referred to as a binder resin A. The binder resin A may have a surface energy in a range shown in the following [Equation 1]. In the following [Equation 1], X represents a surface energy of the polymer column, and Y represents a surface energy of the binder resin A. As a unit of the surface energy, a unit of dyne/cm or mN/m may be used.

The surface energy of the binder resin A may be measured using a method as follows. First, a film composed of the binder resin A is prepared, a contact angle for each of water and diiodomethane on the surface of the film is measured, and the surface energy is calculated using an Owens-Wendt method. In one embodiment of the present disclosure, the film may be obtained by dissolving the binder resin in a proper organic solvent to prepare a polymer solution, applying the polymer solution on a glass plate, and drying the result at about 80°C. [Equation 1] $0.75 X < Y < 1.15 X$

In 100 wt% of the binder resin, the binder resin A may be comprised in an amount of 20 wt% or greater, 30 wt% or greater, 40 wt% or greater, 50 wt% or greater, 60 wt% or greater, 70 wt% or greater, 80 wt% or greater, 90 wt% or greater, or 95 wt% or greater. In one embodiment, the binder resin may be formed of the binder resin A.

In one embodiment of the present disclosure, the binder resin A is preferably nonionic. In one embodiment of the present disclosure, the binder resin A is preferably soluble in a solvent. It is preferred that the binder resin A does not have an emulsion form.

In another embodiment of the present disclosure, the binder resin A is nonionic. In a specific embodiment of the present disclosure, the binder resin A is soluble in a solvent. In a specific embodiment of the present disclosure, the binder resin A does not have an emulsion form.

Meanwhile, in a specific embodiment of the present disclosure, nonlimiting examples of the binder resin and the binder resin A may include a (meth)acrylic polymer, a vinylidene fluoride-based polymer, polyvinyl alcohol, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, hydroxyalkyl methyl cellulose, hydroxyethyl cellulose, hydroxypropyl cellulose, ethyl hydroxyethyl cellulose, methyl cellulose and the like, and these may be used either alone, or as a mixture of two or more thereof. In one embodiment of the present disclosure, the binder resin A may include polyvinyl alcohol. As a specific example, the binder resin A may be polyvinyl alcohol.

The (meth)acrylic polymer may include at least one of (meth)acrylic acid ester, butyl (meth)acrylate, 2-ethylhexyl (meth)acrylate, ethyl (meth)acrylate, methyl (meth)acrylate, n-propyl (meth)acrylate, isopropyl (meth)acrylate, butyl acrylate, t-butyl (meth)acrylate, pentyl (meth)acrylate, n-octyl (meth)acrylate, isooctyl (meth)acrylate, isononyl (meth)acrylate, lauryl (meth)acrylate and tetradecyl(meth)acrylate as a monomer, however, the (meth)acrylic polymer is not limited thereto.

The vinylidene fluoride-based polymer may include at least one of a homopolymer of vinylidene fluoride (polyvinylidene fluoride), a copolymer of vinylidene fluoride and a monomer copolymerizable therewith, and mixtures thereof. In one embodiment of the present disclosure, as an example of the monomer, a fluorinated monomer, a chlorine-based monomer and/or the like may be used. Nonlimiting examples of the fluorinated monomer may include vinyl fluoride; trifluoroethylene (TrFE); chlorofluoroethylene (CTFE); 1,2-difluoroethylene; tetrafluoroethylene (TFE); hexafluoropropylene (HFP); perfluoro(alkyl vinyl)ether such as perfluoro(methyl vinyl)ether (PMVE), perfluoro(ethyl vinyl)ether (PEVE) and perfluoro(propylvinyl)ether (PPVE); perfluoro(1,3-dioxol); perfluoro(2,2-dimethyl-1,3-dioxol) (PDD) and the like, and one or more thereof may be included. For example, polyvinylidene fluoride-co-hexafluoropropylene or polyvinylidene fluoride-co-trichloroethylene.

In one embodiment of the present disclosure, among the binder resins exemplified above, one, or two or more materials having surface energy values according to [Equation 1] may be selected and used as the binder resin A. Meanwhile, at least one of the binder resins described above may be further comprised in addition to the binder resin A in order to supplement adhesion.

In addition, in one embodiment of the present disclosure, the inorganic coating layer may further comprise an additive such as a dispersant and/or a thickener in an amount ranging from 0.5 parts by weight to 3.0 parts by weight relative to 100 parts by weight of the inorganic particles. When there are materials capable of improving dispersibility and/or viscosity among the examples of the binder resin described above, they may be used as additives for such purposes.

### Method for Manufacturing Separator

Next, a method for manufacturing the separator of the present disclosure will be described. However, the following description relates to one embodiment to manufacture the present disclosure, and the method is not particularly limited thereto.

Specifically, inorganic particles are introduced first to a proper solvent to prepare a mixture. After that, polymer particles for a polymer column are introduced to the mixture to prepare a slurry for an inorganic coating layer. Then, the slurry is applied on the porous substrate, and dried.

In one embodiment of the present disclosure, when the inorganic coating layer further comprises a binder resin, a polymer solution is prepared by dissolving the binder resin in a solvent, and then the inorganic particles and the polymer particles for a polymer column may be sequentially or simultaneously introduced to the polymer solution to prepare a slurry for an inorganic coating layer. The binder resin is preferably a water-soluble binder resin.

After that, the obtained separator is dried to integrally form the inorganic coating layer on the porous substrate. Herein, in order to prevent deformation of the polymer column, the drying temperature of the separator is preferably set to a temperature that is not more than 20°C higher than the glass transition temperature of the polymer column material. Meanwhile, the drying may be performed using a common method for removing a solvent. Examples of the drying method may comprise natural drying, air-blowing drying, warm-air or hot-air drying, high-temperature drying, convective drying and the like, however, the drying method is not limited thereto.

When preparing the slurry, water or an aqueous solvent comprising water may be used as the solvent. In addition, when there are limits in the drying speed and the temperature, methanol, ethanol, isopropyl alcohol or the like having a lower boiling point than water may be used as a co-solvent.

The slurry may be applied using an existing coating method such as a Mayer bar, a die coater, a reverse roll coater or a gravure coater.

Meanwhile, in addition to the manufacturing method described above, any manufacturing method capable of achieving the separator structure described above may be applied without limit.

Meanwhile, the present disclosure provides a secondary battery comprising the separator. The battery comprises: a negative electrode; a positive electrode; and a separator interposed between the negative electrode and the positive electrode, and the separator is a separator provided with the characteristics described above.

In the present disclosure, the positive electrode is provided with a positive electrode current collector, and a positive electrode active material layer comprising a positive electrode active material, a conductor and a binder resin on at least one side surface of the current collector. The positive electrode active material may comprise one, or a mixture of two or more among a layered compound such as lithium manganese composite oxide (LiMn₂O₄, LiMnO₂ or the like), lithium cobalt oxide (LiCoO₂) or lithium nickel oxide (LiNiO₂) or a compound substituted with one or more transition metals; lithium manganese oxide such as a chemical formula of Li₁₊ₓMn₂₋ₓO₄ (herein, x is 0 to 0.33), LiMnO₃, LiMn₂O₃ or LiMnO₂; lithium copper oxide (Li₂CuO₂); vanadium oxide such as LiV₃O₈, LiFe₃O₄, V₂O₅ or Cu₂V₂O₇; Ni-site-type lithium nickel oxide represented by a chemical formula of LiNi₁₋ₓMₓO₂ (herein, M=Co, Mn, Al, Cu, Fe, Mg, B or Ga, and x=0.01 to 0.3); lithium manganese composite oxide represented by a chemical formula of LiMn₂₋ₓMₓO₂ (herein, M=Co, Ni, Fe, Cr, Zn or Ta, and x=0.01 to 0.1) or Li₂Mn₃MO₈ (herein, M=Fe, Co, Ni, Cu or Zn); LiMn₂O₄ in which some of Li in the chemical formula are substituted with alkaline earth metal ions; a disulfide compound; and Fe₂(MoO₄)₃.

In the present disclosure, the negative electrode is provided with a negative electrode current collector, and a negative electrode active material layer comprising a negative electrode active material, a conductor and a binder resin on at least one side surface of the current collector. The negative electrode may comprise, as the negative electrode active material, one, or a mixture of two or more selected from among lithium metal oxide; carbon such as non-graphitizable carbon or graphite-based carbon; metal composite oxides such as LiₓFe₂O₃ (0≤x≤1), LiₓWO₂ (0≤x≤1) and SnₓMe₁₋ₓMe'_{y}O_{z} (Me: Mn, Fe, Pb, Ge; Me': Al, B, P, Si, an element of group 1, 2 or 3 of the periodic table, halogen; 0<x≤1; 1≤y≤3; 1≤z≤8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers such as polyacetylene; Li-Co-Ni-based materials; and titanium oxide.

In a specific embodiment of the present disclosure, the conductor may be, for example, any one selected from the group consisting of graphite, carbon black, carbon fiber or metal fiber, metal powder, conductive whisker, conductive metal oxides, activated carbon and polyphenylene derivatives, or a mixture of two or more of these conductive materials. More specifically, the conductor may be one selected from the group consisting of natural graphite, artificial graphite, super-p, acetylene black, ketjen black, channel black, furnace black, lamp black, thermal black, denka black, aluminum powder, nickel powder, zinc oxide, potassium titanate and titanium oxide, or a mixture of two or more of these conductive materials.

The current collector is not particularly limited as long as it has high conductivity without causing chemical changes to the corresponding battery, and for example, stainless steel, copper, aluminum, nickel, titanium, baked carbon, or aluminum or stainless steel of which surface is treated with carbon, nickel, titanium, silver or the like, and the like may be used.

As the binder resin, polymers commonly used in an electrode in the art may be used. Nonlimiting examples of such a binder resin may include polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose and the like, but are not limited thereto.

### Manufacture of Battery

A method for manufacturing a battery of the present disclosure is characterized in that a first compression is performed (dry compression) during electrode assembly manufacture or before impregnation with an electrolyte liquid, and after that, a second compression is performed after the electrode assembly is impregnated with an electrolyte liquid and the polymer columns are softened by the electrolyte liquid.

First, a laminate comprising at least one positive electrode, at least one separator and at least one negative electrode is prepared. The laminate is formed by laminating the positive electrode, the negative electrode, and the separator interposed therebetween at least once. The elements such as the electrodes and the separator constituting the laminate are not in close contact with each other, but are simply stacked. After that, the laminate is pressed at a strength of 3.0 MPa to 4.0 MPa under a temperature condition of 55°C to 65°C to prepare a first electrode assembly. Herein, the polymer columns in the separator are not completely flattened. Since the polymer columns are not completely flattened before the electrolyte liquid impregnation as described above and a certain distance is maintained between the separator and the electrodes, the electrolyte liquid may favorably flow into the first electrode assembly. In other words, there is an advantage in that a flow path is secured for the electrolyte liquid.

After that, the first electrode assembly is impregnated with an electrolyte liquid, and then the second compression is performed. The second compression comprises a step of applying a pressure of 0.5 MPa to 1.5 MPa to the impregnated first electrode assembly. Pressure is applied to the impregnated first electrode assembly to bring the separator and the positive electrode and/or the separator and the negative electrode into close contact, and the pressure is preferably applied under a temperature condition of 35°C to 45°C. After the electrode assembly is sufficiently impregnated with the electrolyte liquid, the second compression is performed to bring the electrode and the separator into close contact as described above. Accordingly, there is an advantage of improving wettability of the electrode assembly. Meanwhile, the step of impregnating the first electrode assembly with an electrolyte liquid comprises storing the first electrode assembly in a battery case, and after the impregnation and before applying the pressure, a step of aging may be further performed. The aging may be preferably performed at a temperature of 20°C or higher. An excessively high temperature is not preferred since it may deteriorate the materials used in the battery. The aging temperature may be, for example, in a range of not more than 20°C higher than the glass transition temperature (Tg) of the binder resin used.

In the present disclosure, the electrolyte liquid comprises one obtained by dissolving or dissociating a salt having a structure such as A⁺B⁻, in which A⁺ includes an ion consisting of an alkali metal cation such as Li⁺, Na⁺ or K⁺ or a combination thereof and B⁻ comprises an ion consisting of an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻ or C(CF₂SO₂)₃⁻ or a combination thereof, in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone (g -butyrolactone), an ester-based compound, or a mixture of one or more selected therefrom, however, the electrolyte liquid is not limited thereto.

Meanwhile, in a specific embodiment of the present disclosure, the organic solvent may comprise an ester-based compound. The ester-based compound may be preferably comprised in an amount of 30 wt% or greater, 50 wt% or greater, 60 wt% or greater or 65 wt% or greater relative to 100 wt% of the organic solvent.

In a specific embodiment of the present disclosure, the ester-based compound comprises at least one selected from the group consisting of isobutyl propionate, isoamyl propionate, isobutyl butyrate, isopropyl propionate, methyl propionate, ethyl propionate, propyl propionate, butyl propionate, methyl acetate, ethyl acetate, propyl acetate, butyl acetate, methyl butyrate, ethyl butyrate, propyl butyrate, and butyl butyrate.

In addition, the present disclosure provides a battery module comprising the battery comprising the electrode assembly as a unit cell, a battery pack comprising the battery module, and a device comprising the battery pack as a power source. Specific examples of the device may comprise power tools operated by receiving power by an electric motor; electric motor vehicles comprising electric vehicles (EV), hybrid electric vehicles (HEV), plug-in hybrid electric vehicles (PHEV) and the like; electric two-wheeled bicycles comprising electric bicycles (E-bike) and electric scooters (E-scooter); electric golf carts; systems for power storage and the like, but are not limited thereto.

In the present disclosure, each of the above-described embodiments may be implemented independently. Alternatively, two or more of the embodiments may be implemented in combination.

Hereinafter, the present disclosure will be described in detail with reference to examples in order to specifically describe the present disclosure. However, examples according to the present disclosure may be modified to various other forms, and the scope of the present disclosure should not be construed as being limited to the examples described below. The examples of the present disclosure are provided in order to more fully describe the present disclosure to those of ordinary skill in the art.

### Example

### Measurement of Surface Energy

A water-dispersible emulsion of acrylic polymer A15 of the following Table 1 was prepared, applied on a glass plate to a predetermined thickness, and left unattended at 80°C to be dried. A thin film having a thickness of about 100 µm was obtained therefrom. Water and diiodomethane were dropped onto the surface of the thin film obtained above, and a contact angle for each liquid was measured. Using each of the measured values, the surface energy was calculated using an Owens-Wendt method. For the polyvinyl alcohol used in Example 1, the surface energy was also calculated in the same manner.

### Measurement of Thickness of Separator

In Examples and Comparative Examples, the thickness of the separator was determined by cutting a cross-section of the separator specimen, observing the cross-section by an SEM, and then taking the thickness at the thickest point as the thickness of the separator. The results are summarized in the following [Table 1]. Meanwhile, the thickness of the inorganic particle-filled portion was determined as an average value of the values measured at three arbitrary points.

### Measurement of Storage Modulus of Polymer Column

A polymer material to be used as the polymer column in each of the Comparative Examples and the Examples was used to prepare a sample having a size of 40 cmx 60 cm. The thickness of the sample was 1 mm. A modulus was measured for the sample. The storage modulus was measured using a rheological property analyzer (dynamic mechanical analyzer (DMA), ARES-G2, TA Instrument). The storage modulus was determined by conducting a temperature sweep test under a temperature condition of -60°C to 80°C and a frequency of 1.0 rad/s. The results are summarized in the following Table 1.

### Measurement of Solubility of Polymer Column

A polymer material to be used as the polymer column in each of the Comparative Examples and the Examples was used to prepare 0.3 g of a sample at 60°C. The sample was placed on a mesh screen having a mesh size of 80 and dissolved in THF (tetrahydrofuran) for 24 hours, after which the weight of the remaining residue was compared with the initial weight. The solubility was calculated based on the following [Equation 5]. The results are summarized in the following Table 1. [Equation 5] 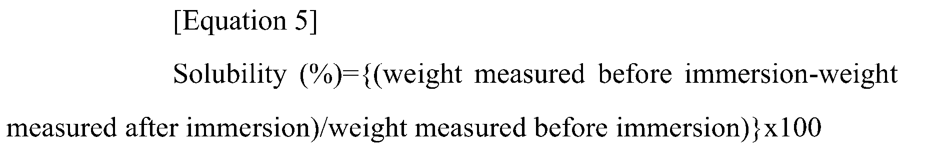 Solubility (%)={(weight measured before immersion-weight measured after immersion)/weight measured before immersion)}x100

### Measurement of Molecular Weight

The molecular weight (weight average molecular weight/number average molecular weight) was measured through a gel permeation chromatography (GPC) analysis. PL GPC220 by Agilent Technologies was used, and the measurement conditions were as follows.
- Column (maker, model No.): 2xTSKgel SupermultiporeHZ-M+TSKgel SuperHZ-2500
- Eluent: THF
- Temperature: 40°C
- Flow rate: 1.0 mL/min
- Injection volume and sample concentration: 30 µl, and 1 mg/mL to 10 mg/mL
- Standard: Polystyrene
- Detector: RI

### Measurement of Glass Transition Temperature

The glass transition temperature (Tg) was measured using a differential scanning calorimetry (DSC, TA Instrument) device. Each obtained sample (10 mg to 15 mg) was cooled from ambient temperature to -30°C, and then heated to 200°C at 10°C/min. After that, the sample was cooled to -30°C, and then the glass transition temperature was measured while reheating the sample at 10°C/min.

**[Table 1]**

| | Storage Modulus (25°C, Pa) | Storage Modulu s (60°C, Pa) | G' (60°C)/G' (Room Temperat ure, °C) | tan δ peak (°C, 45°C to 80°C) | Solubil ity (%) | Tg (°C) | Surface Energy (dyne/c m) |
|---|---|---|---|---|---|---|---|
| Acrylic Polyme r A15 | 1,381.0 | 50.1 | 0.036 | 69.9 | 19% | 60.0 | 40.7 |

### Example 1

Inorganic particles (Al₂O₃, D₅₀ about 0.3 µm), an acrylic binder as a binder resin (Toyo Corporation, CSB-130) and sodium carboxymethyl cellulose (Daicel Corporation, Daicel 1220, CMC-Na, surface energy 20 dyne/cm or less) were introduced to a solution of water and ethanol (95:5) in a ratio of 96:2:2, and a dispersion process was performed using a bead mill to obtain a mixture.

To the mixture, acrylic polymer A15 for a polymer column (D₅₀ 3.84 µm) and polyvinyl alcohol as a binder resin A (A-PEC Co., Ltd, SBC-1810, surface energy 37.2 dyne/cm) were introduced, and the result was stirred to obtain a dispersion slurry. The concentration of the solid content in the dispersion slurry was 15 wt%. In the mixture, the content of the polymer particles for a polymer column was about 30 parts by weight relative to 100 parts by weight of the inorganic particles, and the binder resin A was comprised in an amount of 4 parts by weight relative to 100 parts by weight of the polymer columns. The dispersion slurry was applied on a porous substrate (Toray Corporation, B09PJ1, thickness 9 µm) using a micro-gravure coating method, and dried at a temperature of 80°C to obtain a separator. In addition, the opposite surface was also coated and dried in the same manner to obtain a double-side-coated separator. In the separator, the loading amount of the inorganic coating layer was 2.1 g/m² based on the single side of the porous substrate. After that, the obtained separator was pressed with a hot press under conditions of 3.5 MPa and 60°C for 20 seconds.

### Comparative Example 1

Inorganic particles (Al₂O₃, D₅₀ about 0.6 µm), an acrylic binder as a binder resin (Toyo Corporation, CSB-130), and carboxymethyl cellulose (Daicel Corporation, Daicel 1220) were introduced to a solution of water and ethanol (95:5) in a ratio of 96:2:2, and the mixture solution was stirred to obtain a mixture.

To the mixture, acrylic polymer A15 for a polymer column (D₅₀ 3.84 µm) was introduced, and the result was stirred to obtain a dispersion slurry. The concentration of the solid content in the dispersion slurry was 30 wt%.

The mixture was applied on a porous substrate (Toray Corporation, B09PJ1, thickness 9 µm) using a micro-gravure coating method, and dried at a temperature of 80°C. In the separator, the loading amount of the inorganic coating layer was 2.0 /m² based on the single side of the porous substrate. The manufactured separator was wound to a length of 2,000 m. The manufactured separator was stored for 7 days in a wound state, and then unwound, and an SEM image near the core portion was measured and shown in FIG. 2. Meanwhile, the obtained separator was compressed with a hot press under conditions of 3.5 MPa and 65°C for 20 seconds to flatten the surface.

### Comparative Example 2

Inorganic particles (Al₂O₃, D₅₀ about 0.6 µm), an acrylic binder as a binder resin (Toyo Corporation, CSB-130), and carboxymethyl cellulose (Daicel Corporation, Daicel 1220) were introduced to a solution of water and ethanol (95:5) in a ratio of 96:2:2, and the mixture solution was stirred to obtain a mixture.

To the mixture, acrylic polymer A15 for a polymer column (D₅₀ 3.84 µm) was introduced, and the result was stirred to obtain a dispersion slurry. The concentration of the solid content in the dispersion slurry was 15 wt%.

The mixture was applied on a porous substrate (Toray Corporation, B09PJ1, thickness 9 µm) using a micro-gravure coating method, and dried at a temperature of 80°C. In the separator, the loading amount of the inorganic coating layer was 3.2 g/m² based on the single side of the porous substrate. Meanwhile, the obtained separator was compressed with a hot press under conditions of 3.5 MPa and 65°C for 20 seconds to flatten the surface.

**[Table 2]**

| | Example 1 | Comparative Example 1 | Comparative Example 2 |
|---|---|---|---|
| Total Thickness of Separator (µm) (before Compression) | 13.6 | 13.5 | 13.8 |
| Thickness of Inorganic Particle-Filled Portion (µm, Tᵢ, Excluding Polymer Column) (before Compression) | 1.4 | 1.5 | 3.1 |
| Thickness of Inorganic Particle-Filled Portion (Tᵢ)/Polymer Column D₅₀ (%) | 36.5 | 39.1 | 80.1 |
| Polymer Column Coverage (%) | 15.5 | 10.3 | 15.3 |
| Thickness of Separator after Pressing (µm) | 10.6 | 10.7 | 12.3 |
| Detachment Frequency ((crater/total), %) | 0 | 38.2 | 0 |

Referring to Table 2, the separator of Comparative Example 1 had a problem in that the coverage of the polymer columns was low due to detachment of the polymer columns after winding. In addition, although Comparative Example 2 was able to prevent detachment due to the large thickness of the inorganic coating layer, it was difficult to secure energy density of the lithium secondary battery since the separator thickness after pressing did not decrease to a desired level. Accordingly, it was confirmed that the separator according to the present disclosure had excellent adhesion and was able to secure energy density of the lithium secondary battery, which is advantageous in terms of processability as well.

### [Reference Numeral]

10 Porous Substrate
20 Inorganic Coating Layer
100 Polymer Column
200 Inorganic Particle
Tₛ Thickness of Separator
Tₚ Protruding Height of Polymer Column
Tᵢ Height of Inorganic Particle-Filled Portion, T_{c} Height of Inorganic Coating Layer

## Claims

1. A separator comprising: a porous polymer substrate; and
an inorganic coating layer covering one surface or both surfaces of the porous polymer substrate,
wherein the inorganic coating layer comprises a plurality of adhesive polymer columns each having a predetermined volume, and the polymer column is made of a polymer material and has no pores,
at least a portion of the polymer column is exposed on a surface of the inorganic coating layer and another portion thereof is in contact with the surface of the porous substrate,
at least one of the polymer columns is spaced apart from another polymer column by a predetermined distance,
spaces between the polymer columns are filled with an inorganic particle-filled portion, the inorganic particle-filled portion comprises inorganic particles and a binder resin, and the binder resin comprises a binder resin A satisfying the following [Equation 1], and in the following Equation 1, X represents a surface energy of the polymer column and Y represents a surface energy of the binder resin A: [Equation 1] $0.75 X < Y < 1.15 X .$

2. The separator of claim 1, wherein a thickness of the inorganic particle-filled portion (Tᵢ) is 5% or greater and 40% or less of a diameter D₅₀ of the polymer column.

3. The separator of claim 1, wherein the inorganic particle-filled portion has a height of (Tᵢ) equal to or less than 2 µm.

4. The separator of claim 1, wherein, after a pressure of 3.0 MPa to 4.0 MPa is applied to the separator for 20 seconds or less under a temperature condition of 55°C to 65°C, a protruding height (Tₚ) of the polymer column is equal to or less than 1.1 times a height (Tᵢ) of the inorganic particle-filled portion.

5. The separator of claim 1, wherein, after a pressure of 3.0 MPa to 4.0 MPa is applied to the separator for 20 seconds or less under a temperature condition of 55°C to 65°C, a protruding height (Tₚ) of the polymer column is 1 µm or less.

6. The separator of claim 1, wherein, when observing an SEM image of the surface of the separator, craters generated by detachment of the polymer columns account for less than 1% relative to 100% of the polymer columns before detachment.

7. The separator of claim 1, wherein the polymer column has a storage modulus (G') of 1,000 Pa or greater and 3,000 Pa.

8. The separator of claim 1, wherein the polymer column has an electrolyte liquid uptake of 30% or greater, and the electrolyte liquid uptake is determined according to the following [Equation 2]: [Equation 2] 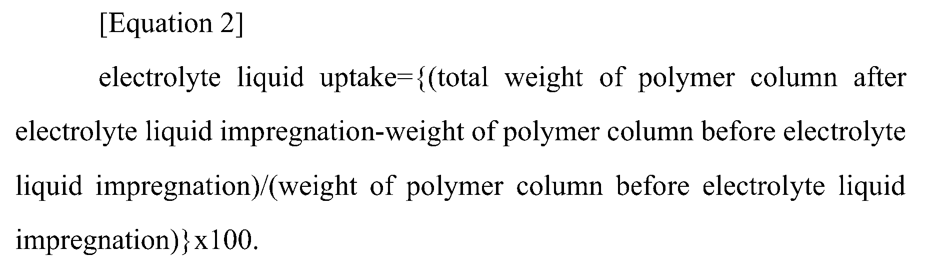 electrolyte liquid uptake={(total weight of polymer column after electrolyte liquid impregnation-weight of polymer column before electrolyte liquid impregnation)/(weight of polymer column before electrolyte liquid impregnation)}x100.

9. The separator of claim 1, wherein a D₅₀ of the polymer column is at least twice a D₅₀ of the inorganic particles.

10. The separator of claim 1, wherein a thickness (Tᵢ) of the inorganic particle-filled portion is 85% or less of a D₅₀ of the polymer column.

11. The separator of claim 1, wherein a D₁₀ of the polymer column is 30% or greater of the D₅₀, and a D₉₀ thereof is 200% or less of the D₅₀.

12. The separator of claim 1, wherein, based on a top view of the separator, an area occupied by the polymer columns is 10% to 50% relative to 100% of an area of the inorganic coating layer surface.

13. The separator of claim 1, wherein at least one of the polymer columns comprised in the inorganic coating layer has a cross-sectional area of the polymer column observed in a cross-section at the upper 5% from an uppermost portion of the inorganic coating layer toward a lower portion thereof, which is larger than a cross-sectional area (a) of the polymer column observed in a cross-section at the lower 5% from a lowermost portion of the inorganic coating layer toward a surface portion thereof.

14. The separator of claim 1, wherein at least one of the polymer columns comprised in the inorganic coating layer has, in a cross-section of the polymer column observed in a vertical cross-section of the inorganic coating layer, a diameter (a) of a lower portion of the polymer column that is smaller than a diameter (b) of an upper portion of the polymer column, and a ratio of the diameter (b) to the diameter (a) is 2 to 20.

15. The separator of claim 1, wherein the inorganic coating layer has a pore structure formed by an interstitial volume between the inorganic particles.

16. An electrochemical device comprising the separator of claim 1.
